# EUROPÄISCHE PATENTSCHRIFT

(11) **EP 1 919 609 B1**
(45) Veröffentlichungstag und Bekanntmachung des Hinweises auf die Patenterteilung: **30.05.2018**
(21) Anmeldenummer: 06778210.2
(22) Anmeldetag: 10.08.2006
(51) Int. Cl.: B01J 19/24, C08F 2/10, B01J 19/22

(54) **VERFAHREN ZUR HERSTELLUNG WASSERABSORBIERENDER POLYMERPARTIKEL**
METHOD FOR PRODUCING WATER-ABSORBING POLYMER PARTICLES
PROCEDE POUR PRODUIRE DES PARTICULES POLYMERES QUI ABSORBENT L'EAU

(30) Priorität: 24.08.2005 US 710925 P
(43) Veröffentlichungstag der Anmeldung: 14.05.2008
(73) Patentinhaber: BASF SE, 67056 Ludwigshafen am Rhein (DE)
(72) Erfinder: FUNK, Rüdiger, 65527 Niedernhausen (DE); SCHRÖDER, Jürgen, 67071 Ludwigshafen (DE)
(74) Vertreter: BASF IP Association
(86) Internationale Anmeldenummer: PCT/EP2006/065206
(87) Internationale Veröffentlichungsnummer: WO 2007/023097

(56) Entgegenhaltungen:
- EP-A2- 0 574 007
- EP-A2- 1 426 402
- WO-A-03/093345
- WO-A-2005/010055
- GB-A- 1 443 394
- US-A- 967 261
- US-A- 3 719 643
- US-A- 5 480 616

## Beschreibung

Die vorliegende Erfindung betrifft ein Verfahren zur Herstellung wasserabsorbierender Polymerpartikel durch Polymerisation in mindestens zwei parallelen kontinuierlichen Polymerisationsreaktoren, wobei die Reaktionsprodukte in mindestens einem Verfahrenschritt gemeinsam weiterverarbeitet werden.

Wasserabsorbierende Polymere sind insbesondere Polymere aus (co)polymerisierten hydrophilen Monomeren, Pfropf(co)polymere von einem oder mehreren hydrophilen Monomeren auf einer geeigneten Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate. Solche Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Wasserabsorbierende Harze haben typischerweise eine Zentrifugenretentionskapazität von 15 bis 60 g/g, vorzugsweise von mindestens 20 g/g, bevorzugt von mindestens 25 g/g, besonders bevorzugt von mindestens 30 g/g, ganz besonders bevorzugt von mindestens 35 g/g. Die Zentrifugenretentionskapazität (CRC) wird gemäß der von der EDANA (European Disposables and Nonwovens Association) empfohlenen Testmethode Nr. 441.2-02 "Centrifuge retention capacity" bestimmt.

Zur Verbesserung der Anwendungseigenschaften, wie beispielsweise Flüssigkeitsleitfähigkeit (SFC) in der Windel und Absorption unter Druck (AUL), werden wasserabsorbierende Polymerpartikel im allgemeinen nachvernetzt. Diese Nachvernetzung kann in wässriger Gelphase durchgeführt werden. Vorzugsweise werden aber gemahlene und abgesiebte Polymerpartikel (Grundpolymer) an der Oberfläche mit einem Nachvernetzer beschichtet, getrocknet und thermisch nachvernetzt. Dazu geeignete Vernetzer sind Verbindungen, die mindestens zwei Gruppen enthalten, die mit den Carboxylatgruppen des hydrophilen Polymeren kovalente Bindungen bilden können oder die mindestens zwei Carboxylgruppen oder andere funktionelle Gruppen mindestens zweier verschiedener Polymerketten des Grundpolymers miteinander vernetzen können.

Die Herstellung wasserabsorbierender Harze ist vielfach beschrieben, siehe beispielsweise "Modern Superabsorbent Polymer Technology", F.L. Buchholz and A.T. Graham, Wiley-VCH, 1998, Seiten 69 bis 117.

Die Herstellung wasserabsorbierender Harze umfasst üblicherweise die Schritte Polymerisation, Gelzerkleinerung, Trocknung, Mahlung, Siebung, Nachvernetzung und ggf. erneute Siebung.

Ein Problem bei der kontinuierlichen Herstellung wasserabsorbierender Polymerpartikel ist, dass die Eigenschaften der hergestellten Polymerpartikel, wie Zentrifugenretentionskapazität (CRC), Absorption unter Druck (AUL), Flüssigkeitsweiterleitung (SFC), Restmonomerengehalt, Partikelgrößenverteilung, Extrahierbare und Wassergehalt, während der Produktion über die Zeit nur schwer konstant gehalten werden können. EP-A 1 426 402 offenbart ein Verfahren zur kontinuierlichen Herstellung wasserabsorbierender Polymere, wobei Abweichungen bei der Produktqualität ausgeglichen werden, indem das Produkt nach der Nachvernetzung analysiert, Produkt mit zu großer Qualitätsabweichung vollständig abgetrennt und in das noch nicht analysierte Produkt zurückgeführt wird.

Die Aufgabe der vorliegenden Erfindung war die Bereitstellung eines verbesserten Verfahrens zur kontinuierlichen Herstellung wasserabsorbierender Polymerpartikel mit gleichbleibender Qualität.

Ein weiteres Problem bei der Herstellung wasserabsorbierender Polymerpartikel ist die Tatsache, dass nicht spezifikationsgerechtes Produkt, welches bei Störungen bei der Polymerisation anfällt, nicht in spezifikationsgerechtes Produkt umgewandelt werden kann und entsorgt werden muss.

Eine weitere Aufgabe der vorliegenden Erfindung war daher die Bereitstellung eines Verfahrens zur kontinuierlichen Herstellung wasserabsorbierender Polymerpartikel, wobei das erfindungsgemäße Verfahren insbesondere geringfügige Dosierungenauigkeiten bei der Polymerisation ausgleichen kann.

Dosierungenauigkeiten treten beispielsweise bei der kontinuierlichen Polymerisation auf. Die Einsatzstoffe werden dabei üblicherweise mengengeregelt dosiert, wobei die verwendeten Regler die Ventilöffnung erst bei einer Sollwertabweichung anpassen.

Die Polymerisation ist eine sehr empfindliche Reaktion. Abweichungen bei der Dosierung, insbesondere bei der Initiatordosierung, können daher zu signifikanten Abweichungen bei der Produktqualität führen.

Gelöst wurde die Aufgabe durch ein Verfahren gemäß Anspruch 1 zur Herstellung wasserabsorbierender Polymerpartikel, wobei die Polymerisation in mindestens zwei parallelen kontinuierlichen Polymerisationsreaktoren unter weitgehend identischen Bedingungen durchgeführt wird und die Reaktionsprodukte in mindestens einem Verfahrensschritt gemeinsam weiterverarbeitet werden.

Dadurch, dass wasserabsorbierender Polymerpartikel gleicher Rezeptur in parallelen Polymerisationsreaktoren hergestellt werden, werden mögliche Störungen während der Polymerisation nur gedämpft weitergegeben. Dies ist insbesondere deshalb wichtig, weil die Polymerisation ein äußerst empfindlicher Verfahrensschritt ist.

Weitgehend identische Bedingungen bedeutet, dass in den parallelen Polymerisationsreaktoren im Rahmen der Dosiergenauigkeit identische Monomerlösungen polymerisiert werden, mit dem Ziel identische Hydrogele zu erhalten.

Der mindestens eine Verfahrensschritt, in dem die Polymere aus den parallelen Polymerisationsreaktoren gemeinsam weiterverarbeitet werden, dient der Homogenisierung. Daher sollten die Polymere gut durchmischt werden. Nachdem die Polymere aus den parallelen Polymerisationsreaktoren gut durchmischt wurden, können die Polymere auch getrennt weiterverarbeitet werden.

Geeignete Reaktoren sind Knetreaktoren oder Bandreaktoren. Im Kneter wird das bei der Polymerisation einer wässrigen Monomerlösung entstehende Polymergel durch beispielsweise gegenläufige Rührwellen kontinuierlich zerkleinert, wie in WO 01/38402 beschrieben. Die Polymerisation auf dem Band wird beispielsweise in DE-A 38 25 366 und US 6,241,928 beschrieben. Bei der Polymerisation in einem Bandreaktor entsteht ein Polymergel, das in einem weiteren Verfahrensschritt zerkleinert werden muss, beispielsweise in einem Fleischwolf, Extruder oder Kneter.

Vorzugsweise werden im erfindungsgemäßen Verfahren Bandreaktoren und/oder Kneter verwendet. In einer bevorzugten Ausführungsform werden ausschließlich Bandreaktoren oder Kneter verwendet.

Im erfindungsgemäßen Verfahren können zwei, drei, vier, fünf oder mehr parallele Polymerisationsreaktoren eingesetzt werden.

Der mindestens eine Verfahrensschritt, in dem die wasserabsorbierenden Polymerpartikel gemeinsam weiterverarbeitet werden, unterliegt keiner Beschränkung. Wichtig ist aber, dass die Reaktionsprodukte erst dann gemeinsam weiterverarbeitet werden, wenn die Polymerisation im wesentlichen abgeschlossen ist. Die Polymerisation ist im wesentlichen abgeschlossen, wenn das Polymergel die Reaktoren verlässt. Üblicherweise beträgt der Monomerumsatz mindestens 90 mol-%, vorzugsweise mindesten 95 mol-%, besonders bevorzugt mindestens 97 mol-%. Dadurch dass die Polymerisation weitgehend abgeschlossen ist, haben statistische Abweichungen oder Störungen in den späteren Verfahrensschritten nur noch wenig Einfluss auf die innere Struktur der Polymerpartikel. Beispielsweise kann der Verfahrensschritt, in dem die Polymere gemeinsam weiterverarbeitet werden, die Lagerung des Hydrogels, die Trocknung des Hydrogels, die Mahlung des getrockneten Hydrogels, die Siebung der gemahlenen Polymerpartikel, die Nachvernetzung oder die Siebung der nachvernetzten Polymerpartikel sein.

Der mindestens eine Verfahrensschritt, in dem die wasserabsorbierenden Polymerpartikel gemeinsam weiterverarbeitet werden, ist üblicherweise die Nachvernetzung, vorzugsweise die Siebung der gemahlenen Polymerpartikel, bevorzugt die Mahlung des getrockneten Hydrogels, besonders bevorzugt die Trocknung des Hydrogels, ganz besonders bevorzugt die Lagerung des Hydrogels nach der Polymerisation. Vorteilhaft werden die Reaktionsprodukte der mindestens zwei kontinuierlichen Polymerisationsreaktoren zu einem möglichst frühen Stadium des Verfahrens nach der Polymerisation gemeinsam weiterverarbeitet.

Besonders vorteilhaft ist das erfindungsgemäße Verfahren, wenn die verwendeten Monomere mit nur wenig Polymerisationsinhibitor stabilisiert sind, d.h, wenn bezogen auf das Monomer weniger als 0,016 Gew.-%, vorzugsweise von 0,001 bis 0,013 Gew.-%, besonders bevorzugt von 0,003 bis 0,007 Gew.-%, Polymerisationsinhibitor eingesetzt wird. Polymerisationsinhibitoren werden aus Sicherheitsgründen verwendet, um eine Polymerisation vor dem Reaktor zu verhindern. Durch einen geringeren Anteil an Polymerisationsinhibitor wird die Reaktion schneller und ist schwerer zu regeln.
Das Hydrogel wird vorzugsweise mittels eines Bandtrockners getrocknet.

Die im erfindungsgemäßen Verfahren herstellbaren wasserabsorbierenden Polymerpartikel werden durch Polymerisation einer Monomerlösung, enthaltend
i) mindestens ein ethylenisch ungesättigtes, säuregruppentragendes Monomer,
ii) mindestens einen Vernetzer,
iii) gegebenenfalls ein oder mehrere mit i) copolymerisierbare ethylenisch und/oder allylisch ungesättigte Monomere und
iv) gegebenenfalls ein oder mehrere wasserlösliche Polymere, auf die die Monomere i), ii) und ggf. iii) zumindest teilweise aufgepfropft werden können,
   wobei das dabei erhaltene Grundpolymer getrocknet, klassiert,
v) gegebenenfalls mit mindestens einem Nachvernetzer nachbehandelt, getrocknet und thermisch nachvernetzt
wird, hergestellt.

Geeignete Monomere i) sind ethylenisch ungesättigte Carbonsäuren, wie Acrylsäure, Methacrylsäure, Maleinsäure, Fumarsäure und Itaconsäure, oder deren Derivate, wie Acrylamid, Methacrylamid, Acrylsäureester und Methacrylsäureester. Besonders bevorzugte Monomere sind Acrylsäure und Methacrylsäure. Ganz besonders bevorzugt ist Acrylsäure.

Die Monomere i), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 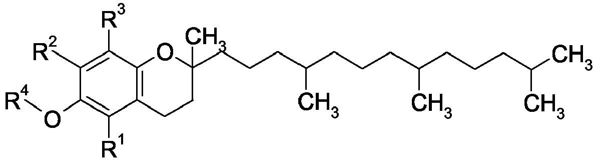 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R⁴ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere bevorzugt um 50 Gew.-ppm, Hydrochinonhalbether, jeweils bezogen auf Acrylsäure, wobei Acrylsäuresalze rechnerisch als Acrylsäure mit berücksichtigt werden. Beispielsweise kann zur Herstellung der Monomerlösung eine Acrylsäure mit einem entsprechenden Gehalt an Hydrochinonhalbether verwendet werden.

Die wasserabsorbierenden Polymere sind vernetzt, d.h. die Polymerisation wird in Gegenwart von Verbindungen mit mindestens zwei polymerisierbaren Gruppen, die in das Polymernetzwerk radikalisch einpolymerisiert werden können, durchgeführt. Geeignete Vernetzer ii) sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A 0 530 438 beschrieben, Di- und Triacrylate, wie in EP-A 0 547 847, EP-A 0 559 476, EP-A 0 632 068, WO 93/21237, WO 03/104299, WO 03/104300, WO 03/104301 und in der deutschen Patentanmeldung mit dem Aktenzeichen 10331450.4 beschrieben, gemischte Acrylate, die neben Acrylatgruppen weitere ethylenisch ungesättigte Gruppen enthalten, wie in den deutschen Patentanmeldungen mit den Aktenzeichen 103 31 456.3 und 103 55 401.7 beschrieben, oder Vernetzermischungen, wie beispielsweise in DE-A 195 43 368, DE-A 196 46 484, WO 90/15830 und WO 02/32962 beschrieben.

Geeignete Vernetzer ii) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A 0 343 427 beschrieben sind. Weiterhin geeignete Vernetzer ii) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer ii) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer ii) sind die mit Acrylsäure oder Methacrylsäure zu Di- oder Triacrylaten veresterten mehrfach ethoxylierten und/oder propoxylierten Glyzerine wie sie beispielsweise in der älteren deutschen Anmeldung mit Aktenzeichen DE 103 19 462.2 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5- fach ethoxylierten und/oder propoxylierten Glyzerins. Am meisten bevorzugt sind die Triacrylate des 3- bis 5-fach ethoxylierten und/oder propoxylierten Glyzerins. Diese zeichnen sich durch besonders niedrige Restgehalte (typischerweise unter 10 Gew.-ppm) im wasserabsorbierenden Polymer aus und die wässrigen Extrakte der damit hergestellten wasserabsorbierenden Polymere weisen eine fast unveränderte Oberflächenspannung (typischerweise mindestens 0,068 N/m) im Vergleich zu Wasser gleicher Temperatur auf.

Die Menge an Vernetzer ii) beträgt vorzugsweise 0,01 bis 1 Gew.-%, besonders bevorzugt 0,05 bis 0,5 Gew.-%, ganz besonders bevorzugt 0,1 bis 0,3 Gew.-%, jeweils bezogen auf das Monomer i).

Mit den Monomeren i) copolymerisierbare ethylenisch ungesättigte Monomere iii) sind beispielsweise Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere iv) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Die Herstellung eines geeigneten Grundpolymers sowie weitere geeignete hydrophile ethylenisch ungesättigte Monomere i) werden in DE-A 199 41 423, EP-A 0 686 650, WO 01/45758 und WO 03/104300 beschrieben.

Die Umsetzung wird vorzugsweise in einem Kneter, wie beispielsweise in WO 01/38402 beschrieben, oder auf einem Bandreaktor, wie beispielsweise in EP-A 955 086 beschrieben, durchgeführt.

Vorteilhaft wird das Hydrogel nach dem Verlassen des Polymerisationsreaktors noch bei höherer Temperatur, vorzugsweise mindestens 50°C, besonders bevorzugt mindestes 70°C, ganz besonders bevorzugt mindestens 80°C, sowie vorzugsweise weniger als 100°C, gelagert, beispielsweise in isolierten Behältern. Durch die Lagerung, üblicherweise 2 bis 12 Stunden, wird der Monomerumsatz weiter erhöht.

Die Säuregruppen der erhaltenen Hydrogele sind üblicherweise teilweise neutralisiert, vorzugsweise zu 25 bis 95 mol-%, bevorzugt zu 27 bis 80 mol-%, besonders bevorzugt zu 27 bis 30 mol-% oder 40 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung, als Schmelze, oder bevorzugt auch als Feststoff erreicht. Beispielsweise kann Natriumhydroxid mit einem Wasseranteil deutlich unter 50 Gew.- als wachsartige Masse mit einem Schmelzpunkt oberhalb 23°C vorliegen. In diesem Fall ist eine Dosierung als Stückgut oder Schmelze bei erhöhter Temperatur möglich.

Die Neutralisation kann nach der Polymerisation auf der Stufe des Hydrogels durchgeführt werden. Es ist aber auch möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels eingestellt wird. Die Monomerlösung kann durch Einmischen des Neutralisationsmittels neutralisiert werden. Das Hydrogel kann mechanisch zerkleinert werden, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden. Die Neutralisation der Monomerlösung direkt auf den Endneutralisationsgrad ist bevorzugt.

Das neutralisierte Hydrogel wird dann mit einem Band- oder Walzentrockner getrocknet bis der Restfeuchtegehalt vorzugsweise unter 15 Gew.-%, insbesondere unter 10 Gew.-% liegt, wobei der Wassergehalt gemäß der von der EDANA (European Disposables and Nonwovens Association) empfohlenen Testmethode Nr. 430.2-02 "Moisture content" bestimmt wird. Wahlweise kann zur Trocknung aber auch ein Wirbelbetttrockner oder ein beheizter Pflugscharmischer verwendet werden. Um besonders weiße Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß umso einfacher und das Produkt umso weißer, wenn der Feststoffgehalt des Gels möglichst hoch ist. Bevorzugt liegt der Feststoffgehalt des Gels vor der Trocknung daher zwischen 30 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern. Im Regelfall führt aber auch eine ausreichende Belüftung und Abführung des Wasserdampfes zu einem noch akzeptablen Produkt. Vorteilhaft hinsichtlich Farbe und Produktqualität ist in der Regel eine möglichst kurze Trocknungszeit.

Eine weitere wichtige Funktion der Trocknung des Gels ist die hier noch stattfindende Verringerung des Restmonomerengehaltes im Superabsorber. Bei der Trocknung zerfallen nämlich eventuell noch vorhandene Reste der Initiatoren und führen zu einer Einpolymerisation von noch vorhandenen Restmonomeren. Außerdem reißen die verdampfenden Wassermengen noch vorhandene freie wasserdampfflüchtige Monomere, wie beispielsweise Acrylsäure mit, und verringern so ebenfalls den Restmonomerengehalt im Superabsorber.

Das getrocknete Hydrogel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen eingesetzt werden können.

Zur Verbesserung der Anwendungseigenschaften, wie beispielsweise Flüssigkeitsleitfähigkeit (SFC) in der Windel und Absorption unter Druck (AUL), werden wasserabsorbierende Polymerpartikel im allgemeinen nachvernetzt. Diese Nachvernetzung kann in wässriger Gelphase durchgeführt werden. Vorzugsweise werden aber gemahlene und abgesiebte Polymerpartikel (Grundpolymer) an der Oberfläche mit einem Nachvernetzer beschichtet, getrocknet und thermisch nachvernetzt. Dazu geeignete Vernetzer sind Verbindungen, die mindestens zwei Gruppen enthalten, die mit den Carboxylatgruppen des hydrophilen Polymeren kovalente Bindungen bilden können oder die mindestens zwei Carboxylgruppen oder andere funktionelle Gruppen mindestens zweier verschiedener Polymerketten des Grundpolymers miteinander vernetzen können.

Hierzu geeignete Nachvernetzer v) sind Verbindungen, die mindestens zwei Gruppen enthalten, die mit den Carboxylatgruppen der Polymere kovalente Bindungen bilden können. Geeignete Verbindungen sind beispielsweise Alkoxysiliylverbindungen, Polyaziridine, Polyamine, Polyamidoamine, Di- oder Polyglycidylverbindungen, wie in EP-A 0 083 022, EP-A 543 303 und EP-A 937 736 beschrieben, mehrwertige Alkohole, wie in DE-C 33 14 019, DE-C 35 23 617 und EP-A 450 922 beschrieben, oder β-Hydroxyalkylamide, wie in DE-A 102 04 938 und US 6,239,230 beschrieben. Geeignet sind ferner Verbindungen mit gemischter Funktionalität, wie Glycidol, 3-Ethyl-3-oxetanmethanol (Trimethylolpropanoxetan), wie in EP-A 1 199 327 beschrieben, Aminoethanol, Diethanolamin, Triethanolamin oder Verbindungen, die nach der ersten Reaktion eine weitere Funktionalität ausbilden, wie Ethylenoxid, Propylenoxid, Isobutylenoxid, Aziridin, Azetidin oder Oxetan.

Des weiteren sind in DE-A 40 20 780 zyklische Karbonate, in DE-A 198 07 502 2-Oxazolidon und dessen Derivate, wie N-(2-Hydroxyethyl)-2-oxazolidon, in DE-A 198 07 992 Bis- und Poly-2-oxazolidinone, in DE-A 198 54 573 2-Oxotetrahydro-1,3-oxazin und dessen Derivate, in DE-A 198 54 574 N-Acyl-2-oxazolidone, in DE-A 102 04 937 zyklische Harnstoffe, in der deutschen Patentanmeldung mit dem Aktenzeichen 103 34 584.1 bizyklische Amidacetale, in EP-A 1 199 327 Oxetane und zyklische Harnstoffe und in WO 03/031482 Morpholin-2,3-dion und dessen Derivate als geeignete Nachvernetzer v) beschrieben.

Die Nachvernetzung wird üblicherweise so durchgeführt, dass eine Lösung des Nachvernetzers auf das Hydrogel oder die trockenen Grundpolymerpartikel aufgesprüht wird. Im Anschluss an das Aufsprühen wird thermisch getrocknet, wobei die Nachvernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige®-Mischer, Bepex®-Mischer, Nauta®-Mischer, Processall®-Mischer und Schugi®-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex®-Trockner und Nara®-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Es kann aber auch beispielsweise eine azeotrope Destillation als Trocknungsverfahren benutzt werden.

Bevorzugte Trocknungstemperaturen liegen im Bereich 50 bis 250°C, bevorzugt bei 50 bis 200°C, und besonders bevorzugt bei 50 bis 150°C. Die bevorzugte Verweilzeit bei dieser Temperatur im Reaktionsmischer oder Trockner beträgt unter 30 Minuten, besonders bevorzugt unter 10 Minuten.

Gemäß dem erfindungsgemäßen Verfahren können wasserabsorbierende Polymerpartikel mit konstanter Qualität hergestellt werden. Die hergestellten wasserabsorbierenden Polymerpartikel weisen in ihren Eigenschaften nur geringe Unterschiede auf. Werden beispielsweise während der kontinuierlichen Produktion wasserabsorbierender Polymerpartikel regelmäßig Proben gezogen, beispielsweise alle 3 Stunden, so ist die Standardabweichung der Messwerte vom Mittelwert bei Verwendung des erfindungsgemäßen Verfahrens niedriger als bei den bisherigen Verfahren.

Weiterhin wirken sich Störungen bei der Polymerisation im erfindungsgemäßen Verfahren weniger auf die Qualität der wasserabsorbierenden Polymerpartikel aus.

### Beispiele

In den Beispielen wurden die Abweichungen der Produktqualität mittels eines Würfels simuliert. Hierbei entspricht der Mittelwert 3,5 (bei gleicher Wahrscheinlichkeit für alle Zahlen und unendlich vielen Würfen).

### Beispiel 1 (Vergleich)

Es wurden zwei unabhängige kontinuierliche Produktionsstraßen simuliert, wobei das Endprodukt in zeitlichen Intervallen analysiert wird.

### Straße A

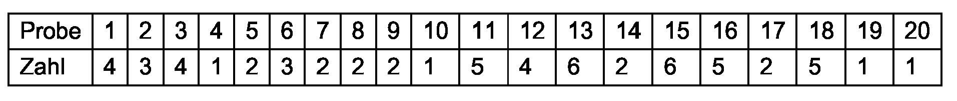

### Straße B

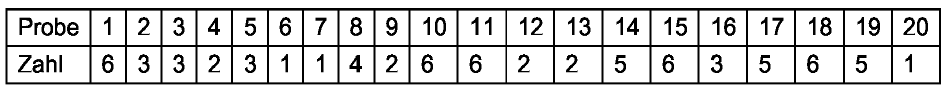

25% der gewürfelten Zahlen (3 + 4) lagen dicht am Mittelwert und 35% der gewürfelten Zahlen (1 + 6) lagen weit vom Mittelwert.

### Beispiel 2

Es wurde simuliert, dass die Produkte der beiden getrennten Polymerisationsstraßen in der Aufarbeitung vereinigt werden. Für die Proben wurden die jeweiligen Mittelwerte der oben ermittelten Zahlen verwendet.

| | | | | | | | | | | |
|---|---|---|---|---|---|---|---|---|---|---|
| Probe | 1 | 2 | 3 | 4 | 5 | 6 | 7 | 8 | 9 | 10 |
| Wert | 5 | 3 | 3,5 | 1,5 | 2,5 | 2 | 1,5 | 3 | 2 | 3,5 |

| | | | | | | | | | | |
|---|---|---|---|---|---|---|---|---|---|---|
| Probe | 11 | 12 | 13 | 14 | 15 | 16 | 17 | 18 | 19 | 20 |
| Wert | 5,5 | 3 | 4 | 3,5 | 6 | 4 | 3,5 | 5,5 | 3 | 1 |

50% der Werte (3 - 4) lagen dicht am Mittelwert und nur 10% der Werte (1 + 6) lagen weit vom Mittelwert.

Das Beispiel zeigt, dass nach dem erfindungsgemäßen Verfahren eine deutlich gleichmäßigere kontinuierliche Produktion möglich ist.

## Patentansprüche

1. Verfahren zur Herstellung wasserabsorbierender Polymerpartikel, durch Polymerisation einer Monomerlösung, enthaltend
i) mindestens ein ethylenisch ungesättigtes, säuregruppentragendes Monomer,
ii) mindestens einen Vernetzer,
iii) gegebenenfalls ein oder mehrere mit i) copolymerisierbare ethylenisch und/oder allylisch ungesättigte Monomere und
iv) gegebenenfalls ein oder mehrere wasserlösliche Polymere, auf die die Monomere i), ii) und ggf. iii) zumindest teilweise aufgepfropft werden können,
wobei das dabei erhaltene Grundpolymer getrocknet, klassiert,
v) gegebenenfalls mit mindestens einem Nachvernetzer nachbehandelt, getrocknet und thermisch nachvernetzt
wird, **dadurch gekennzeichnet, dass** die Polymerisation in mindestens zwei parallelen kontinuierlichen Polymerisationsreaktoren unter weitgehend identischen Bedingungen durchgeführt wird und dass die Reaktionsprodukte in mindestens einem Verfahrensschritt gemeinsam weiterverarbeitet werden.

2. Verfahren gemäß Anspruch 1, **dadurch gekennzeichnet, dass** mindestens einer der parallelen Polymerisationsreaktoren ein Bandreaktor und/oder ein Kneter ist.

3. Verfahren gemäß Anspruch 1 oder 2, **dadurch gekennzeichnet, dass** die parallelen Polymerisationsreaktoren ausschließlich Bandreaktoren oder Kneter sind.

4. Verfahren gemäß einem der Ansprüche 1 bis 3, **dadurch gekennzeichnet, dass** die Reaktionsprodukte der parallelen Polymerisationsreaktoren gemeinsam einem Nachvernetzungsschritt unterworfen werden.

5. Verfahren gemäß einem der Ansprüche 1 bis 4, **dadurch gekennzeichnet, dass** die Reaktionsprodukte der parallelen Polymerisationsreaktoren gemeinsam gesiebt werden.

6. Verfahren gemäß Anspruch 1 bis 5, **dadurch gekennzeichnet, dass** die Reaktionsprodukte der parallelen Polymerisationsreaktoren gemeinsam gemahlen werden.

7. Verfahren gemäß einem der Ansprüche 1 bis 6, **dadurch gekennzeichnet, dass** die Reaktionsprodukte der parallelen Polymerisationsreaktoren gemeinsam getrocknet werden.

8. Verfahren gemäß Anspruch 7, **dadurch gekennzeichnet, dass** der Trockner ein Bandtrockner ist.

9. Verfahren gemäß einem der Ansprüche 1 bis 8, **dadurch gekennzeichnet, dass** die Reaktionsprodukte der parallelen Polymerisationsreaktoren vor der Trocknung gemeinsam gelagert werden.

10. Verfahren gemäß einem der Ansprüche 1 bis 9, **dadurch gekennzeichnet, dass** die in den parallelen Polymerisationsreaktoren polymerisierte Monomerlösung Acrylsäure und mindestens einen mit Acrylsäure copolymerisierbaren Vernetzer enthält.

11. Verfahren gemäß einem der Ansprüche 1 bis 10, **dadurch gekennzeichnet, dass** die Polymerisation in Gegenwart von weniger als 0,016 Gew.-%, bezogen auf das Monomer, eines Polymerisationsinhibitors durchgeführt wird.

12. Verfahren zur Herstellung von Hygieneartikeln, beinhaltend das Verfahren gemäß einem der Ansprüche 1 bis 10 zur Herstellung wasserabsorbierender Polymerpartikel.

## Claims

1. A process for producing water-absorbing polymeric particles, by addition polymerization of a monomer solution comprising
i) at least one ethylenically unsaturated acid-functional monomer,
ii) at least one crosslinker,
iii) optionally one or more ethylenically and/or allylically unsaturated monomers copolymerizable with i), and
iv) optionally one or more water-soluble polymers onto which the monomers i), ii) and optionally iii) can be at least partly grafted,
the base polymer obtained being dried, classified,
v) optionally aftertreated with at least one postcrosslinker, dried and thermally postcrosslinked,
which comprises conducting the polymerization in at least two parallel continuous polymerization reactors under substantially identical conditions and further processing the reaction products conjointly in at least one process step.

2. The process according to claim 1 wherein at least one of the parallel polymerization reactors is a belt reactor and/or a kneader.

3. The process according to claim 1 or 2 wherein the parallel polymerization reactors are exclusively belt reactors or kneaders.

4. The process according to any one of claims 1 to 3 wherein the reaction products of the parallel polymerization reactors are conjointly subjected to a postcrosslinking step.

5. The process according to any one of claims 1 to 4 wherein the reaction products of the parallel polymerization reactors are conjointly screened.

6. The process according to any one of claims 1 to 5 wherein the reaction products of the parallel polymerization reactors are conjointly ground.

7. The process according to any one of claims 1 to 6 wherein the reaction products of the parallel polymerization reactors are conjointly dried.

8. The process according to claim 7 wherein the dryer is a belt dryer.

9. The process according to any one of claims 1 to 8 wherein the reaction products of the parallel polymerization reactors are conjointly stored before drying.

10. The process according to any one of claims 1 to 9 wherein the monomer solution polymerized in the parallel polymerization reactors comprises acrylic acid and at least one crosslinker copolymerizable with acrylic acid.

11. The process according to any one of claims 1 to 10 wherein the polymerization is carried out in the presence of less than 0.016% by weight, based on the monomer, of a polymerization inhibitor.

12. A process for producing a hygiene article, which comprises the process according to any one of claims 1 to 10 for producing water-absorbing polymeric particles.

## Revendications

1. Procédé de fabrication de particules polymères absorbant l'eau, par polymérisation d'une solution de monomères, contenant :
i) au moins un monomère éthyléniquement insaturé portant des groupes acides,
ii) au moins un agent de réticulation,
iii) éventuellement un ou plusieurs monomères éthyléniquement et/ou allyliquement insaturés copolymérisables avec i), et
iv) éventuellement un ou plusieurs polymères solubles dans l'eau, sur lesquels les monomères i), ii) et éventuellement iii) peuvent au moins partiellement être greffés,
le polymère de base obtenu étant séché, classifié,
v) éventuellement post-traité avec au moins un agent de post-réticulation, séché et post-réticulé thermiquement,
**caractérisé en ce que** la polymérisation est réalisée dans au moins deux réacteurs de polymérisation continus parallèles dans des conditions essentiellement identiques, et **en ce que** les produits de réaction sont transformés ensemble dans au moins une étape de procédé.

2. Procédé selon la revendication 1, **caractérisé en ce qu'**au moins un des réacteurs de polymérisation parallèles est un réacteur à bande et/ou un malaxeur.

3. Procédé selon la revendication 1 ou 2, **caractérisé en ce que** les réacteurs de polymérisation parallèles sont exclusivement des réacteurs à bande ou des malaxeurs.

4. Procédé selon l'une quelconque des revendications 1 à 3, **caractérisé en ce que** les produits de réaction des réacteurs de polymérisation parallèle sont soumis ensemble à une étape de post-réticulation.

5. Procédé selon l'une quelconque des revendications 1 à 4, **caractérisé en ce que** les produits de réaction des réacteurs de polymérisation parallèle sont tamisés ensemble.

6. Procédé selon les revendications 1 à 5, **caractérisé en ce que** les produits de réaction des réacteurs de polymérisation parallèles sont broyés ensemble.

7. Procédé selon l'une quelconque des revendications 1 à 6, **caractérisé en ce que** les produits de réaction des réacteurs de polymérisation parallèles sont séchés ensemble.

8. Procédé selon la revendication 7, **caractérisé en ce que** le séchoir est un séchoir à bande.

9. Procédé selon l'une quelconque des revendications 1 à 8, **caractérisé en ce que** les produits de réaction des réacteurs de polymérisation parallèles sont entreposés ensemble avant le séchage.

10. Procédé selon l'une quelconque des revendications 1 à 9, **caractérisé en ce que** la solution de monomères polymérisée dans les réacteurs de polymérisation parallèles contient de l'acide acrylique et au moins un agent de réticulation copolymérisable avec l'acide acrylique.

11. Procédé selon l'une quelconque des revendications 1 à 10, **caractérisé en ce que** la polymérisation est réalisée en présence de moins de 0,016 % en poids, par rapport au monomère, d'un inhibiteur de polymérisation.

12. Procédé de fabrication d'articles d'hygiène, contenant le procédé selon l'une quelconque des revendications 1 à 10 pour la fabrication de particules polymères absorbant l'eau.
